# EUROPÄISCHE PATENTSCHRIFT

(11) **EP 3 875 354 B1**
(45) Veröffentlichungstag und Bekanntmachung des Hinweises auf die Patenterteilung: **04.10.2023**
(21) Anmeldenummer: 21154899.5
(22) Anmeldetag: 03.02.2021
(51) Int. Cl.: B62D 63/06, B62D 53/00

(54) **TRANSPORTANHÄNGER**
TRANSPORT TRAILER
REMORQUE DE TRANSPORT

(30) Priorität: 04.03.2020 DE 102020105831
(43) Veröffentlichungstag der Anmeldung: 08.09.2021
(73) Patentinhaber: Schaeffler Technologies AG & Co. KG, 91074 Herzogenaurach (DE)
(72) Erfinder: Sichert, Thomas, 91322 Gräfenberg (DE)

(56) Entgegenhaltungen:
- EP-A1- 3 345 786
- WO-A1-2018/019495
- DE-A1-102018 210 180
- DE-U1-202011 051 446
- FR-E- 72 499

## Beschreibung

Die Erfindung betrifft einen Transportanhänger, welcher eine Wanne für Schüttgut umfasst, wobei mehrere solcher Transportanhänger zu einem Transportanhängerverbund zusammenstellbar sind.

Ein Transportanhängerverbund mit mindestens zwei miteinander gekoppelten Transportanhängern ist beispielsweise in der DE 10 2016 123 005 A1 beschrieben. In diesem Fall weisen einzelne Fahrwerke jeweils mindestens zwei Laufrollen auf, die um eine gemeinsame Drehachse drehbar sind. Verbindungselemente an der vorderen und hinteren Seite eines jeden Fahrwerks sind zur gelenkigen Anbindung einer Koppelstange ausgeführt, welche zwei der Transportanhänger miteinander verbindet. Zusätzlich sind die Transportanhänger durch eine Gelenkstrebe miteinander verbunden.

Die EP 2 778 015 B1 offenbart einen Handwagen mit zusammenschiebbarer Zugdeichsel, welche in den Patentansprüchen der EP 2 778 015 B1 als Anhängerkupplung bezeichnet ist. Die Zugdeichsel ist von einer horizontalen Position in eine aufrechte Position schwenkbar, wobei der hierfür vorgesehene Schwenkmechanismus eine Feder umfasst.

Verschiedene Fahrzeuge und Fahrzeugaufbauten zum Transport und Umschlag von Schüttgütern sind in den Dokumenten EP 2 048 025 A1, DE 295 18 411 U1 und DE 1 003 132 B beschrieben.

Die DE 10 2018 210 180 A1 beschreibt ein Dolly zum Transport eines Cargo-Containers mit einer Ladeplattform, mit Rädern, von welchen mindestens eines lenkbar ausgebildet ist, und einer Deichsel, die am vorderen Ende ein Kupplungsteil einer Anhängerkupplung trägt.

Die EP 3 345 786 A1 offenbart einen Transportanhänger nach dem Oberbegriff des Anspruchs 1.

Der Erfindung liegt die Aufgabe zu Grunde, einen gegenüber dem Stand der Technik weiterentwickelten, einfach und robust aufgebauten, leicht handhabbaren Transportanhänger für Schüttgut anzugeben, welcher sich zur Zusammenstellung eines Anhängerverbundes eignet.

Diese Aufgabe wird erfindungsgemäß gelöst durch einen Transportanhänger mit den Merkmalen des Anspruchs 1. Der Transportanhänger ist zur Bildung eines Transportanhängerverbundes geeignet und umfasst eine Wanne, vier Räder, nämlich zwei nicht lenkbare Räder, auch als Bockrollen bezeichnet, und zwei lenkbare Räder, eine Deichsel und eine Anhängerkupplung, wobei die Deichsel auf der Seite der nicht lenkbaren Räder und die Anhängerkupplung auf der Seite der lenkbaren Räder, das heißt Lenkrollen, angeordnet ist. Sowohl die nicht lenkbaren Räder als auch die lenkbaren Räder sind an Befestigungsplatten angebracht, welche von der Wanne nach außen abstehen. Die waagrechten Befestigungsplatten, welche auch als Konsolen bezeichnet werden, stellen Verlängerungen des Bodens der Wanne nach vorne und nach hinten dar. Damit ist ein besonders großer Radstand des Transportanhängers gegeben, was sich günstig auf dessen Laufverhalten auswirkt. Auch bei Zusammenstellung von mehr als zwei, beispielsweise drei, gleichartigen Transportanhängern ist eine gute Handhabbarkeit des damit gebildeten Zuges, selbst bei beengten Platzverhältnissen, zum Beispiel innerhalb einer Halle eines Industriebetriebes, gegeben.

Durch die Anordnung der Deichsel auf der Seite der nicht lenkbaren Räder und die Anordnung der Anhängerkupplung auf der Seite der lenkbaren Räder ist ein umgekehrtes Deichselsystem gebildet. Die Wanne weist in typischer Ausgestaltung drei gerade Wände und eine schräge Wand auf, wobei die lenkbaren Räder erfindungsgemäß unterhalb der schrägen Wand, das heißt einer schrägen Platte der Wanne, angeordnet sind. Bei den lenkbaren Rädern handelt es sich um passiv lenkbare Räder. Eine aktive zwangsweise Verstellung des Einschlagwinkels der Räder, etwa mittels der Deichsel, ist nicht vorgesehen. Vielmehr würden sich die lenkbaren Räder bei angehobenem Transportanhänger frei um eine vertikale Achse schwenken lassen.

Die Räder, welche an derjenigen Seite der Wanne angebracht sind, an welcher sich die Deichsel befindet, das heißt die nicht lenkbaren Räder, sind vorzugsweise genauso dimensioniert wie die lenkbaren Räder. Grundsätzlich kommen auch unterschiedlich dimensionierte Räder als lenkbare Räder einerseits und nicht lenkbare Räder andererseits in Betracht. Im Unterschied zu derjenigen Platte, welche sich auf der Seite der lenkbaren Räder befindet, ist die Platte auf der Seite nicht lenkbaren Räder, das heißt die deichselseitige Wand der Wanne, vorzugsweise vertikal ausgerichtet. In bevorzugter Ausgestaltung ragen die Räder auf der Seite der Deichsel über die Wanne hinaus, wogegen auf der Seite der schrägen Platte in umgekehrter Weise die Wanne über die Räder hinausragt.

Die Deichsel ist vorzugsweise in eine zumindest annähernd vertikale Stellung kippbar, in welcher sie zwischen zwei Stoßfängerteilen, die an der senkrechten Platte angebracht sind, geschützt ist. Die Stoßfängerteile sind beispielsweise an der flüssigkeitsdichten Wanne angeschraubt oder angeschweißt. Auch eine integrale Bildung der Stoßfängerteile unmittelbar durch die Wanne ist prinzipiell möglich. In jedem Fall sind die Stoßfängerteile derart gestaltet, dass die Deichsel im hochgeklappten Zustand beim Anstoßen des Anhängers an eine Wand nicht in Kontakt mit der Wand kommt.

An der schrägen Platte der Wanne ist vorzugsweise ein Stoßfänger angeordnet, welcher im Unterschied zu den deichselseitigen Stoßfängerteilen, die allgemein auch als Abstandspuffer bezeichnet werden, nicht über die Außenkonturen der Wanne hinausragt. Analog zu den beiden deichselseitigen Stoßfängerteilen sind auch bei dem auf der gegenüberliegenden Seite der Wanne angeordneten Stoßfänger verschiedenste Möglichkeiten der Befestigung an der Wanne gegeben.

Eine gute Handhabbarkeit eines aus mehreren Transportanhängern gebildeten Verbundes ist insbesondere in Ausführungsformen gegeben, in welchen der Radstand eines jeden Transportanhängers mindestens 85% und höchstens 105% der Länge der Wanne beträgt. Der Radstand ist hierbei auf den Zustand des Transportanhängers mit nach außen geklappten lenkbaren Rädern bezogen, stellt also den maximalen Radstand dar.

An den beiden Seitenwänden der Wanne befindet sich vorzugsweise eine Kippvorrichtung, welche zwei Bolzen pro Seitenplatte der Wanne umfasst. Sofern verschieden hohe Varianten des Transportanhängers existieren, befinden sich die Bolzen vorzugsweise in einer einheitlichen Höhe.

Die Wanne stellt die tragende Konstruktion des gesamten Transportanhängers dar. Vorzugsweise ist die Wanne als flüssigkeitsdichte Stahlkonstruktion ausgebildet. Gemäß einer vorteilhaften Weiterbildung ist in die Wanne ein Rohr eingebaut, insbesondere eingeschweißt, welches zum Absaugen von Öl nutzbar ist. Das Rohr befindet sich platzsparend in einer Ecke der Wanne, insbesondere zwischen der vertikalen, deichselseitigen Wand und einer der Seitenwände, das heißt Seitenplatten. Das Rohr, welches vorzugsweise als Metallrohr ausgeführt ist, reicht annähernd bis zum Boden der Wanne und ermöglicht das Einführen eines Absaugschlauches, der bei Bedarf bis zum Wannenboden vorgeschoben werden kann.

Der Transportanhänger eignet sich besonders zum Transport und Umschlag von Schüttgut. Hierbei handelt es sich beispielsweise um Metallteile, an denen sich Öl befinden kann. Generell eignet sich der Transportanhänger für pulvrige, körnige und stückige Gemenge, insbesondere zur Entsorgung anstehende Gemenge. Unter anderem ist der Transportanhänger zur Entsorgung von Schleifschlamm nutzbar.

Nachfolgend wird ein Ausführungsbeispiel der Erfindung anhand einer Zeichnung näher erläutert. Hierin zeigen:

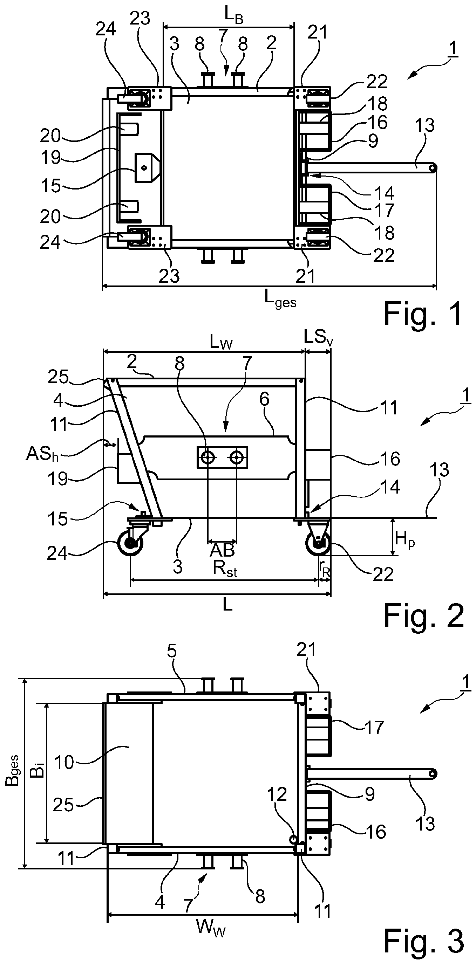

- Fig. 1: einen Transportanhänger in Ansicht von unten,
- Fig. 2: den Transportanhänger in Seitenansicht,
- Fig. 3: den Transportanhänger in Ansicht von oben,

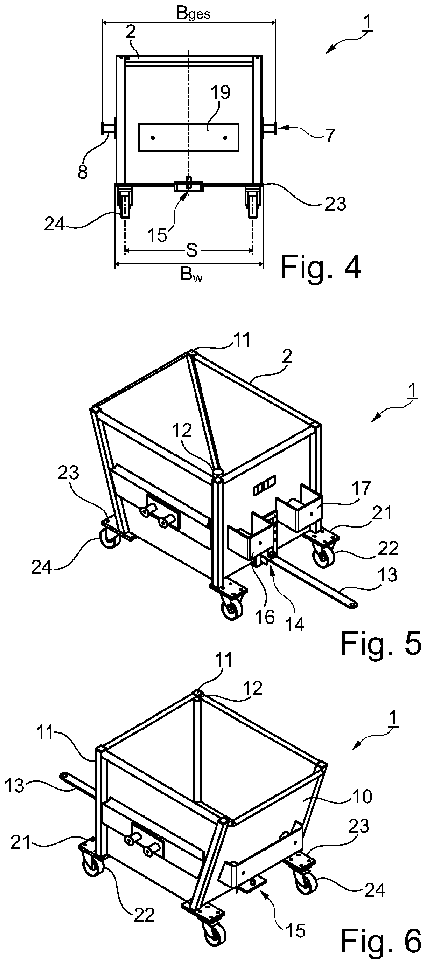

- Fig. 4: den Transportanhänger in stirnseitiger Ansicht,
- Fig. 5 und 6: den Transportanhänger in perspektivischen Ansichten.

Ein insgesamt mit dem Bezugszeichen 1 gekennzeichneter Wagen, das heißt Transportanhänger, ist zur Zusammenstellung eines Schleppverbandes vorgesehen. Der Wagen 1 weist eine Wanne 2 auf, bei welcher es sich um eine Stahlkonstruktion handelt. Die Wanne 2 stellt zugleich die tragende Struktur des Transportanhängers 1 bereit. Dies bedeutet, dass kein gesondertes Fahrgestell vorhanden ist.

Die Wanne 2 weist eine Bodenplatte 3 und vier Wandplatten 4, 5, 9, 10, nämlich zwei Seitenplatten 4, 5, eine Frontplatte 10 und eine Heckplatte 9 auf. Die Begriffe "Frontplatte" und "Heckplatte" geben an, in welche Richtung der gesamte Schleppverband einschließlich des Wagens 1 typischerweise gezogen wird. Die Wandplatten 4, 5, 9, 10 sind im vorliegenden Fall durch Eckprofile 11 miteinander verbunden. An den Seitenplatten 4, 5 befindet sich jeweils ein Seitenprofil 6, an welchem Komponenten einer Kippvorrichtung 7 gehalten sind. Hierbei sind an jedem Seitenprofil 6 zwei Bolzen 8 befestigt, die der Kippvorrichtung 7 zuzurechnen sind und ein Kippen der Wanne 2 und damit des gesamten Wagens 1 mit Hilfe einer nicht dargestellten, an sich bekannten Hebe- und Schwenkvorrichtung ermöglichen.

Der Wagen 1 eignet sich zum Transport und Umschlag schüttfähiger Güter, an welchen sich beispielsweise Öl befinden kann. Um ein Auslaufen von Öl zu verhindern, ist die Wanne 2 flüssigkeitsdicht ausgebildet. Bei Bedarf kann Öl aus der Wanne 2 abgesaugt werden, indem ein Absaugschlauch in ein Rohr 12 eingeführt wird, welches sich in einer Ecke der Wanne 2, nämlich zwischen der Heckplatte 9 und der Seitenplatte 4, befindet und annähernd bis zur Bodenplatte 3 reicht. Die Heckplatte 9 ist im Ausführungsbeispiel, ebenso wie die Seitenplatten 4, 5, vertikal ausgerichtet. Im Unterschied hierzu ist die Frontplatte 10 schräggestellt.

Von der Heckplatte 9 geht eine Deichsel 13 aus, welche über ein Kippgelenk 14 mit der Wanne 2 gekoppelt ist. Auf der gegenüberliegenden Seite der Wanne 2, das heißt an der Frontplatte 10, befindet sich eine Kupplung 15, an die eine Deichsel eines weiteren, nicht dargestellten Transportanhängers identischer Bauart angehängt werden kann. Da sich die Deichsel 13 am Heck des Wagens 1 befindet, wird von einem umgedrehten Deichselsystem gesprochen.

Die Deichsel 13 des abgebildeten Wagens 1 ist von der in den Figuren erkennbaren, waagrechten Ausrichtung in eine vertikale Position kippbar, in welcher sie geschützt zwischen zwei Stoßfängerteilen 16, 17 angeordnet ist. Die Stoßfängerteile 16, 17 sind jeweils über ein Rohrstück 18 mit der Heckplatte 9 verbunden. Alternativ kommt auch eine Befestigung der Stoßfängerteile 16, 17 ohne gesondertes, rohrförmiges Befestigungselement direkt an der Heckplatte 9 und/oder an den hieran angrenzenden Eckprofilen 11 in Betracht.

Das Gegenstück zu den Stoßfängerteilen 16, 17 ist ein vergleichsweise breiter, durchgehender Stoßfänger 19 an der Frontplatte 10. Im Gegensatz zu den Stoßfängerteilen 16, 17 ragt der Stoßfänger 19 nicht über den Grundriss der Wanne 2 hinaus. Zur Befestigung des Stoßfängers 19 an der Frontplatte 10 sind im Ausführungsbeispiel zwei Rohrstücke 20 vorgesehen. Analog zu den Stoßfängerteilen 16, 17 ist auch in diesem Fall alternativ eine unmittelbare Anbindung des Stoßfängers 19 an den Eckprofilen 11 und/oder an der Frontplatte 10 möglich. Sowohl in Gestaltungen mit Zwischenelementen, beispielsweise in Form von Rohrstücken 20, als auch bei Entfall solcher Zwischenelemente kann der Stoßfänger 19 mit Hilfe von Schweißverbindungen mit der Wanne 2 verbunden sein. Unabhängig vom Stoßfänger 19 ist am oberen Rand der Frontplatte 10 eine Verstärkungswulst 25 ausgebildet.

Die mit L_{ges} bezeichnete Gesamtlänge des Wagens 1 wird von der Verstärkungswulst 25 bis zum Ende der vorgeklappten Deichsel 13, welche sich am Heck des Wagens 1 befindet, gemessen. Mit L ist die Gesamtlänge des Wagens 1 ohne Deichsel 13 bezeichnet. Die Gesamtlänge L entspricht der Summe aus der mit Lw bezeichneten Länge der Wanne 2 und der mit LSᵥ bezeichneten Länge der Stoßfängerteile 16, 17.

Die Länge der Bodenplatte 3 ist mit L_{B} bezeichnet. H_{P} bezeichnet die Höhe der Bodenplatte 3. Die waagrecht angeordnete Deichsel 13 befindet sich etwa auf Höhe der Bodenplatte 3. Im Ausführungsbeispiel ist dies eine Höhe von etwa 190 mm. Die mit Ww bezeichnete Weite der Wanne 2 ist an der Oberkante der Wanne 2 zwischen der Heckplatte 9 und der Frontplatte 10 zu messen. Der mit ASₕ bezeichnete Abstand des Stoßfängers 19 von der hinteren Kontur der Wanne 2, das heißt von der Verstärkungswulst 25, ist geringer als die Länge LSᵥ der vorderen Stoßfängerteile 16, 17.

Quer zur Längsrichtung des Wagens 1 sind dessen Gesamtbreite B_{ges} sowie die mit Bw bezeichnete Breite der Wanne 2 zu messen. Die Breite Bw ist hierbei einschließlich mehrerer Befestigungsplatten 21, 23 zu messen, welche die Verbindung zwischen der Wanne 2 und verschiedenen Rollen 22, 24 herstellen und auch als Konsolen bezeichnet werden. Durch die Konsolen 21, 23 ist die Bodenplatte 3 am Heck und an der Front der Wanne 2 verlängert. Zur Laufruhe des Transportanhängers 1 trägt die Verlängerung der Wanne 2 durch die Konsolen 21, 23 maßgeblich bei. Die Rollen 22, 24, allgemein auch als Räder bezeichnet, haben im vorliegenden Fall einen einheitlichen Radius r_{R}. Der Radstand des Wagens 1 ist mit Rₛₜ, die Spurweite mit S bezeichnet. Im vorliegenden Fall beträgt der Radstand Rₛₜ 940 mm. Die Spurweite S weicht von der mit Bᵢ bezeichneten inneren Breite der Wanne 2 um weniger als 5 % ab.

Die über die Heckplatte 9 hinausragenden Befestigungsplatten 21 tragen jeweils eine nicht lenkbare Rolle 22, das heißt Bockrolle, und schließen zusammen mit den Stoßfängerteilen 16, 17 an der Hinterkante des Wagens 1 (ohne Deichsel 13) ab. Ebenso reichen die nicht lenkbaren Rollen 22 bis zur Hinterkante des Wagens 1, wobei die an der Hinterseite des Wagens 1 über die Wanne 2 hinausragende Deichsel 13 außer Betracht bleibt. Im hochgeklappten Zustand der Deichsel 13 befindet sich diese geschützt vor der Hinterkante des Wagens 1, sodass selbst ein Anstoßen des Wagens 1 an einer Wand die Deichsel 13 nicht beschädigen würde.

Sowohl die Stoßfängerteile 16, 17 als auch der Stoßfänger 19 befinden sich in einer Höhe, die von einem Bereich unterhalb der Bolzen 8 bis über die Mittelachsen der Bolzen 8 reicht. Die Bolzen 8, das heißt Aufnahmezapfen für eine Auskipp-Vorrichtung, befinden sich im Ausführungsbeispiel auf einer Höhe von 590 mm, wobei sie von der senkrechten Platte 9 einen Abstand von 347 mm haben. Der Abstand zwischen den Mittelachsen der Bolzen 8 ist mit AB bezeichnet und beträgt im dargestellten Fall 150 mm.

Sind die lenkbaren Rollen 24 nach außen, das heißt in Fahrtrichtung, geklappt, wie in den Figuren dargestellt, so schließen sie nach vorne etwa mit dem Stoßfänger 19 ab. Dies ist gleichbedeutend damit, dass die an den Befestigungsplatten 23 gelagerten Rollen 24 vollständig unterhalb der Frontplatte 10 angeordnet sind. Der Radstand Rₛₜ bezieht sich auf diesen nach vorne geklappten Zustand der lenkbaren Rollen 24. In diesem Zustand entspricht die Länge L des Wagens 1 ohne Deichsel der Summe aus dem Randstand Rₛₜ, dem Abstand ASₕ des vorderen Stoßfängers 19 von der vorderen Kontur der Wanne 2 und dem doppelten Radius r_{R} einer Rolle 24. Gleichzeitig entspricht der Radstand Rₛₜ mindestens 90 % und höchstens 98 % der Länge Lw der Wanne 2.

### Bezugszeichenliste

- 1: Wagen, Transportanhänger
- 2: Wanne
- 3: Bodenplatte
- 4: Seitenplatte
- 5: Seitenplatte
- 6: Seitenprofil
- 7: Kippvorrichtung
- 8: Bolzen
- 9: Heckplatte, senkrechte Platte
- 10: Frontplatte, schräge Platte
- 11: Eckprofil
- 12: Rohr
- 13: Deichsel
- 14: Kippgelenk
- 15: Anhängerkupplung
- 16: Stoßfängerteil
- 17: Stoßfängerteil
- 18: Rohrstück
- 19: Stoßfänger
- 20: Rohrstück
- 21: Befestigungsplatte, Konsole
- 22: nicht lenkbare Rolle, Rad
- 23: Befestigungsplatte, Konsole
- 24: lenkbare Rolle, Rad
- 25: Verstärkungswulst

- AB: Abstand zwischen den Bolzen
- ASₕ: Abstand des hinteren Stoßfängers von der hinteren Kontur der Wanne
- B_{ges}: Gesamtbreite
- Bᵢ: innere Breite der Wanne
- B_{W}: Breite der Wanne einschließlich Befestigungsplatten
- Hp: Höhe der Bodenplatte
- L: Gesamtlänge ohne Deichsel
- L_{B}: Länge der Bodenplatte
- L_{ges}: Gesamtlänge mit Deichsel
- LSᵥ: Länge der vorderen Stoßfängerteile
- L_{W}: Länge der Wanne
- r_{R}: Radius der Rolle
- Rst: Radstand
- S: Spurweite
- W_{w}: obere Weite der Wanne

## Patentansprüche

1. Transportanhänger, mit einer Wanne (2), vier Rädern (22, 24), nämlich zwei nicht lenkbaren Rädern (22) und zwei lenkbaren Rädern (24), einer Deichsel (13) und einer Anhängerkupplung (15), wobei die Deichsel (13) auf der Seite der nicht lenkbaren Räder (22) und die Anhängerkupplung (15) auf der Seite der lenkbaren Räder (24) angeordnet ist, wobei sowohl die nicht lenkbaren Räder (22) als auch die lenkbaren Räder (24) an von der Wanne (2) nach außen abstehenden Befestigungsplatten (21, 23) angebracht sind und wobei die lenkbaren Räder (24) unterhalb einer schrägen Platte (10) der Wanne (2) angeordnet sind.

2. Transportanhänger nach Anspruch 1, **dadurch gekennzeichnet, dass** die Wanne (2) deichselseitig eine senkrechte Platte (9) aufweist.

3. Transportanhänger nach Anspruch 2, **dadurch gekennzeichnet, dass** die Räder (22) auf der Seite der Deichsel (13) über die Wanne (2) hinausragen, wogegen auf der Seite der schrägen Platte (10) die Wanne (2) über die Räder (24) hinausragt.

4. Transportanhänger nach einem der Ansprüche 1 bis 3, **dadurch gekennzeichnet, dass** die Deichsel (13) in eine zumindest annähernd vertikale Stellung kippbar ist, in welcher sie zwischen zwei Stoßfängerteilen (16, 17), die an der senkrechten Platte (9) angebracht sind, geschützt ist.

5. Transportanhänger nach Anspruch 4, **gekennzeichnet durch** einen an der schrägen Platte (10) angeordneten Stoßfänger (19), welcher nicht über die Außenkonturen der Wanne (2) hinausragt.

6. Transportanhänger nach einem der Ansprüche 1 bis 5, **dadurch gekennzeichnet, dass** dessen Radstand (Rst) mindestens 85% und höchstens 105% der Länge (Lw) der Wanne (2) beträgt.

7. Transportanhänger nach einem der Ansprüche 1 bis 6, **dadurch gekennzeichnet, dass** die Wanne (2) eine Kippvorrichtung (7) aufweist, welche an beiden Seitenplatten (4, 5) der Wanne (2) jeweils zwei Bolzen (8) umfasst.

8. Transportanhänger nach einem der Ansprüche 1 bis 7, **dadurch gekennzeichnet, dass** die Wanne (2) als flüssigkeitsdichte Stahlkonstruktion ausgebildet ist.

9. Transportanhänger nach Anspruch 8, **gekennzeichnet durch** ein zum Absaugen von Öl nutzbares, in die Wanne (2) eingebautes Rohr (12).

## Claims

1. A transport trailer, having a trough (2), four wheels (22, 24), namely two non-steerable wheels (22) and two steerable wheels (24), a drawbar (13) and a trailer coupling (15), wherein the drawbar (13) is arranged on the side of the non-steerable wheels (22) and the trailer coupling (15) is arranged on the side of the steerable wheels (24), wherein both the non-steerable wheels (22) and the steerable wheels (24) are attached to fastening plates (21, 23) projecting outwards from the trough (2), and wherein the steerable wheels (24) are arranged below an oblique plate (10) of the trough (2).

2. The transport trailer according to claim 1, **characterised in that** the trough (2) has a vertical plate (9) on the drawbar side.

3. The transport trailer according to claim 2, **characterised in that** the wheels (22) protrude beyond the trough (2) on the side of the drawbar (13), whereas on the side of the oblique plate (10) the trough (2) protrudes beyond the wheels (24).

4. The transport trailer according to any one of claims 1 to 3, **characterised in that** the drawbar (13) can be tilted into an at least approximately vertical position in which it is protected between two bumper parts (16, 17), which are attached to the vertical plate (9).

5. The transport trailer according to claim 4, **characterised by** a bumper (19) which is arranged on the oblique plate (10) and does not protrude beyond the outer contours of the trough (2).

6. The transport trailer according to any one of claims 1 to 5, **characterised in that** the wheelbase (Rst) thereof is at least 85% and at most 105% of the length (Lw) of the trough (2).

7. The transport trailer according to any one of claims 1 to 6, **characterised in that** the trough (2) has a tilting device (7) which comprises two bolts (8) on both side plates (4, 5) of the trough (2).

8. The transport trailer according to any one of claims 1 to 7, **characterised in that** the trough (2) is designed as a liquid-tight steel construction.

9. The transport trailer according to claim 8, **characterised by** a pipe (12) which can be used for the suction removal of oil and is built into the trough (2).

## Revendications

1. Remorque de transport, avec une benne (2), quatre roues (22, 24), à savoir deux roues non directionnelles (22) et deux roues directionnelles (24), un timon (13) et un attelage de remorque (15), le timon (13) étant agencé du côté des roues non directionnelles (22) et l'attelage de remorque (15) étant agencé du côté des roues directionnelles (24), aussi bien les roues non directionnelles (22) que les roues directionnelles (24) étant fixées sur des plaques de montage (21, 23) faisant saillie vers l'extérieur depuis la benne (2) et les roues directionnelles (24) étant agencées sous un panneau incliné (10) de la benne (2).

2. Remorque de transport selon la revendication 1, **caractérisée en ce que** la benne (2) présente un panneau vertical (9) côté timon.

3. Remorque de transport selon la revendication 2, **caractérisée en ce que** les roues (22) dépassent de la benne (2) du côté du timon (13), tandis que du côté du panneau incliné (10), la benne (2) dépasse des roues (24).

4. Remorque de transport selon l'une quelconque des revendications 1 à 3, **caractérisée en ce que** le timon (13) peut être basculé dans une position au moins à peu près verticale, dans laquelle il est protégé entre deux parties pare-chocs (16, 17) montées sur le panneau vertical (9).

5. Remorque de transport selon la revendication 4, **caractérisée par** un pare-chocs (19) agencé sur le panneau incliné (10), qui ne dépasse pas des contours extérieurs de la benne (2).

6. Remorque de transport selon l'une quelconque des revendications 1 à 5, **caractérisée en ce que** son empattement (Rst) représente au moins 85 % et au plus 105 % de la longueur (Lw) de la benne (2).

7. Remorque de transport selon l'une quelconque des revendications 1 bis 6, **caractérisée en ce que** la benne (2) présente un dispositif de basculement (7) qui comprend deux boulons (8) sur chacun des deux panneaux latéraux (4, 5) de la benne (2).

8. Remorque de transport selon l'une quelconque des revendications 1 bis 7, **caractérisée en ce que** la benne (2) est réalisée sous forme de construction en acier étanche aux liquides.

9. Remorque de transport selon la revendication 8, **caractérisée par** un tube (12) incorporé à la benne (2) pouvant être utilisé pour aspirer de l'huile.
